# FASCICULE DE BREVET EUROPEEN

(11) **EP 2 812 131 B1**
(45) Date de publication et mention de la délivrance du brevet: **24.02.2016**
(21) Numéro de dépôt: 12806571.1
(22) Date de dépôt: 26.11.2012
(51) Int. Cl.: B07C 3/00

(54) **PROCÉDÉ POUR TRIER DES ENVOIS AVEC UN TRI DESTINATAIRE**
VERFAHREN ZUM ADRESSATENABHÄNGIGEN SORTIEREN VON SENDUNGEN
METHOD FOR RECIPIENT-BASED SORTING MAILINGS

(30) Priorité: 09.02.2012 FR 1251199
(43) Date de publication de la demande: 17.12.2014
(73) Titulaire: Solystic, 92220 Bagneux (FR)
(72) Inventeur: MIETTE, Emmanuel, F-95210 Saint Gratien (FR)
(74) Mandataire: Prugneau, Philippe
(86) Numéro de dépôt international: PCT/FR2012/052721
(87) Numéro de publication internationale: WO 2013/117826

(56) Documents cités:
- EP-A1- 1 835 444
- US-A1- 2003 072 469
- US-A1- 2008 158 615
- US-A1- 2009 084 713

## Description

### Domaine technique

Le domaine de l'invention est celui du tri postal, notamment le tri automatique des envois postaux, les envois pouvant être des lettres, des magazines ou journaux mis sous enveloppe en plastique ou en papier, et de façon générale des objets plats de petit ou grand format ou encore des paquets, cf. le document EP-A-1 835 4.

L'invention concerne plus particulièrement un procédé pour trier du courrier avec un tri destinataire du courrier, c'est-à-dire un tri approfondi sur des points de distribution spécifiques du destinataire.

### Technique antérieure

Le tri automatique du courrier d'une entreprise ou d'une organisation importante en effectif pose le problème que les Postes (Opérateur postal au sens large) qui distribuent le courrier ne connaissent pas les critères de tri internes à l'entreprise ou à l'organisation.

Certaines Postes proposent aux émetteurs de courrier d'identifier chez le destinataire un service particulier en ajoutant un code supplémentaire de tri en plus de l'adresse postale de livraison appelé « TSA ou Tri Service Arrivée » chez la Poste française.

Ce code TSA est un code à cinq chiffres en France qui correspond à une subdivision du destinataire du courrier. L'Opérateur postal peut donc affiner dans ses machines de tri, le tri du courrier destiné à un destinataire ayant un code TSA. Mais cette solution ne peut convenir en fait qu'à des organisations très importantes qui évoluent très rarement et donc ayant des codes TSA qui restent stables dans le temps.

### Exposé de l'invention

Le but de l'invention est de fournir un procédé pour trier du courrier avec un tri destinataire du courrier qui n'utilise pas un code supplémentaire de tri destinataire apposé sur les envois pour être plus adapté à des petites structures d'entreprise ou d'organisation évolutives. Un autre but de l'invention est de proposer un tel procédé qui peut permettre à l'Opérateur postal de trier en fonction d'une personne précise ou d'un service précis chez le destinataire des envois sans que l'Opérateur postal connaisse précisément la structure d'entreprise de ce destinataire à tout moment. Un autre but encore de l'invention est de fournir un tel procédé qui est indépendant des changements de structure du destinataire.

L'idée à la base de l'invention est que le tri destinataire est proposé comme un service auquel souscrit un destinataire à un Opérateur postal. Quand un lot d'envois triés est prêt à être distribué par le facteur chez un destinataire ayant souscrit au service, les images numériques de ces envois sont envoyés au destinataire, lequel peut arranger ces images numériques visuellement par exemple selon un ordre déterminé qui va définir la classification interne courante du destinataire.

L'invention a ainsi pour objet un procédé pour trier des envois selon lequel des envois sont triés automatiquement dans un système de tri en vue d'être livrés à un destinataire par le facteur et sont réintroduits dans une machine de tri pour un tri supplémentaire afin de réordonner les envois selon une certaine classification du destinataire, caractérisé par les étapes suivantes :
- transmission au destinataire, depuis le système de tri, des images numériques correspondant respectivement aux envois à livrer audit destinataire, ces images numériques étant associées dans cette transmission aux identifiants uniques d'envoi générés par le système de tri, en vue d'une réorganisation relative desdits identifiants uniques d'envoi par le destinataire selon un ordre qui définit ladite classification,
- commande de la machine de tri pour effectuer le tri supplémentaire desdits envois à partir desdits identifiants uniques d'envoi réorganisés selon ladite classification du destinataire.

Le procédé selon l'invention peut présenter les particularités suivantes.
- on réordonne les identifiants uniques d'envoi en exploitant un affichage des images numériques des envois dans un poste de vidéo-codage ;
- on réordonne les identifiants uniques d'envoi en exploitant un affichage des images numériques des envois par l'intermédiaire d'un système de reconnaissance automatique par OCR.
- on associe dans le système de vidéo-codage à chaque image numériques d'envoi un code de tri correspondant à un point de distribution du destinataire ;
- la transmission des images numériques d'envois se fait à travers un réseau de communication, par exemple le réseau Internet.

En pratique, on comprend qu'une Poste peut envoyer à un destinataire d'envois abonné à ce service de tri supplémentaire un fichier électronique contenant une succession d'images numériques d'envoi associée chacune dans le fichier à un identifiant unique d'envoi. Le destinataire sur un poste de vidéo-codage ou analogue permettant d'afficher les images numériques l'une à la suite de l'autre, pourra les visualiser dans l'ordre initial de la transmission et ainsi les réordonner selon ses besoins de distribution dans un fichier résultat. Les identifiants uniques d'envois seront par conséquent réordonnés également comme les images numériques dans le fichier résultat et sur la base de ce fichier résultat, une machine de tri pourra être commandée pour effectuer le tri supplémentaire des envois du destinataire à l'image numérique de l'ordre des identifiants uniques d'envois défini dans ce fichier. On comprendra donc que la réorganisation de l'ordre des identifiants uniques d'envoi pourra se faire de différentes manières alors que les images numériques des envois servent à faciliter une réorganisation de manière visuelle.

### Présentation sommaire des dessins

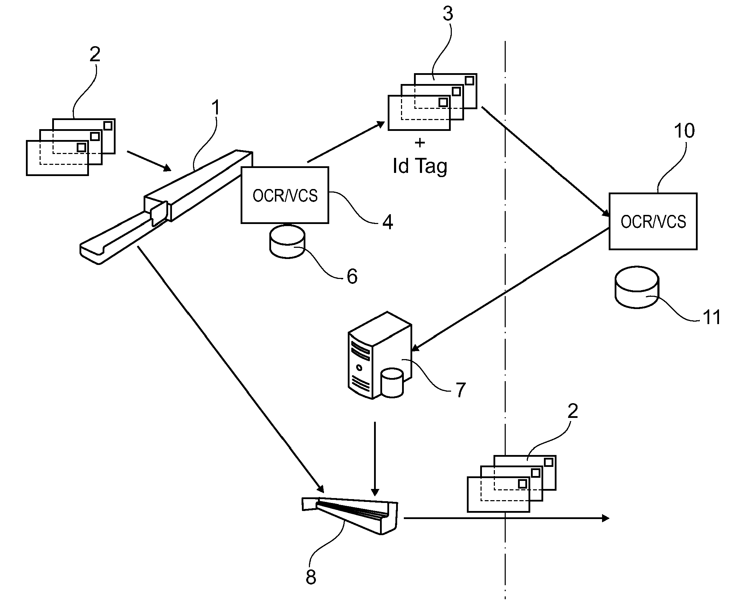

Un exemple de mise en oeuvre du procédé selon l'invention est décrit ci-après plus en détail et est illustré sur la figure unique.

### Description des modes de réalisation

Sur la figure, on a représenté un système de tri d'un Opérateur postal (une Poste) avec une machine de tri 1 qui est par exemple adaptée pour trier des lettres et préparer des tournées du facteur dans ses sorties de tri.

On a représenté un lot d'envois 2 triés pour un destinataire ayant souscrit un service de tri supplémentaire par destinataire auprès de la Poste. Avec cette souscription, à travers un portail internet ou par un système de messagerie, le destinataire peut consulter la liste des envois 2 qui sont prêts à lui être distribués par le facteur. Le destinataire correspond à la partie droite de la figure.

Cette interface de communication est agencée aussi pour permettre au destinataire de récupérer à travers un canal de transmission de données tel qu'internet ou analogue les images numériques 3 des envois 2 en attente d'être livrés associées avec les identifiants uniques d'envois représentés par la référence Id-Tag. Il faut comprendre que ces images numériques 3 d'envoi sont celles qui ont été formées en machine de tri 1 par le système de lecture automatique d'adresse postal par OCR ou par vidéo-codage 4 pour reconnaître une adresse postale de distribution avec exploitation d'une base d'adresses postales 6.

Chaque image numérique 3 est associée à un identifiant unique d'envoi Id-Tag qui est celui également généré pendant le tri machine par la machine de tri 1.

En pratique, les images d'envoi 3 en association respectivement avec les identifiants uniques d'envoi Id-Tag correspondant aux envois 2 destinés au destinataire sont transmises depuis le système de tri de la Poste vers un ordinateur du destinataire dans un fichier électronique. L'ordre de ces images numériques 3 dans le fichier peut être celui des envois 2 en sortie de tri de la machine 1.

Le destinataire reçoit ce fichier et peut alors réorganiser l'ordre de ces images numériques 3 et donc des identifiants uniques d'envoi Id-Tag par exemple à l'aide d'un poste de vidéo-codage 10 avec écran d'affichage. Le destinataire fait défiler les images numériques 3 une à une sur l'écran d'affichage et peut affecter à chaque image numérique 3 un code de tri qui correspond à un point de distribution chez le destinataire. Les différents codes de tri affectés par le destinataire aux images numériques 3 vont ainsi définir un partitionnement des images numériques 3 en différents groupes qui correspondent à la classification des envois 2 par destinataire spécifique ou par service spécifique chez le destinataire.

En variante, les codes de tri supplémentaires pourraient être affectés aux images numériques 3 automatiquement par l'intermédiaire d'un système de reconnaissance automatique par OCR de l'information d'adresse dans chaque image numérique 3 lequel exploiterait une base de données 11 décrivant la structure d'entreprise propre au destinataire.

Les identifiants uniques d'envoi Id-Tag ordonnés par des codes de tri supplémentaires peuvent être récupérés dans un autre fichier électronique qui peut être transmis à la Poste par le destinataire via le réseau internet ou analogue, ce fichier pouvant être reçu sur une unité 7 de contrôle/commande et de traitement de données pilotant une machine de tri 8 chez la Poste.

Les envois 2 destinés au destinataire peuvent donc introduits en entrée de la machine de tri 8, et l'unité 7 peut exploiter le fichier résultat des identifiants ordonnés pour commander la machine de tri 8 de façon à réaliser un tri supplémentaire de ces envois 2 selon la classification demandée par le destinataire. Les envois 2 triés en sortie de la machine de tri 8 pourront être alors livrés ensuite chez le destinataire.

Dans le principe, les envois 2 triés en sortie de la machine de tri 8 sont présentés l'un à la suite de l'autre mais en formant des regroupements en fonction de la classification du destinataire. Afin de faciliter la distribution des groupes d'envois 2 chez le destinataire, des séparateurs ou intercalaires pourraient être passés en machine de tri 8 pour marquer visuellement le début et la fin de chaque groupe d'envois 2.

## Revendications

1. Procédé pour trier des envois (2) selon lequel des envois (2) sont triés automatiquement dans un système de tri en vue d'être livrés à un destinataire par le facteur et sont réintroduis dans une machine de tri (8) pour un tri supplémentaire afin de réordonner les envois (2) selon une certaine classification du destinataire, **caractérisé par** les étapes suivantes :
- transmission au destinataire, depuis le système de tri, des images numériques (3) correspondant respectivement aux envois (2) à livrer audit destinataire, ces images numériques (3) étant associées dans cette transmission aux identifiants uniques d'envoi (Id-Tag) générés par le système de tri, en vue d'une réorganisation relative desdits identifiants uniques d'envoi (Id-Tag) par le destinataire selon un ordre qui définit ladite classification,
- commande de la machine de tri (8) pour effectuer le tri supplémentaire desdits envois (2) à partir desdits identifiants uniques (Id-Tag) d'envoi réorganisés selon ladite classification du destinataire.

2. Procédé selon la revendication 1, dans lequel on réordonne les identifiants uniques d'envoi (Id-Tag) en exploitant un affichage des images numériques (3) des envois (2) dans un poste de vidéo-codage.

3. Procédé selon la revendication 2, dans lequel on associe à chaque image numériques (3) d'envoi (2) dans le système de vidéo-codage un code de tri correspondant à un point de distribution du destinataire.

4. Procédé selon la revendication 1, dans lequel on réordonne les identifiants uniques d'envoi en exploitant un affichage des images numériques (3) des envois (2) par l'intermédiaire d'un système de reconnaissance automatique par OCR.

5. Procédé selon l'une des revendications 1 à 4, dans lequel la transmission des images numériques (3) d'envoi(2) se fait à travers un réseau de communication, par exemple le réseau Internet.

## Patentansprüche

1. Verfahren zum Sortieren von Sendungen (2), bei dem Sendungen (2) automatisch in einem Sortiersystem sortiert werden, um einem Empfänger durch einen Briefträger ausgeliefert zu werden und in eine Sortiermaschine (8) für eine zusätzliche Sortierung wiedereingeführt werden, um die Sendungen (2) gemäß einer bestimmten Klassifikation des Empfängers neu zu sortieren, **gekennzeichnet durch** die folgenden Schritte:
- Übermittlung an den Empfänger, ausgehend von dem Sortiersystem, von digitalen Bildern (3), die jeweils den dem Empfänger zu liefernden Sendungen (2) entsprechen, wobei die digitalen Bilder (3) in dieser Übermittlung mit von dem Sortiersystem erzeugten eindeutigen Sendungsidentifizierungen (Id-Tag) verknüpft sind für eine relative Reorganisation der eindeutigen Sendungsidentifizierungen (Id-Tag) **durch** den Empfänger gemäß einer die Klassifikation definierenden Ordnung,
- Steuern der Sortiermaschine (8) zum Ausführen der zusätzlichen Sortierung der Sendungen (2) ausgehend von den gemäß der Klassifikation des Empfängers reorganisierten eindeutigen Sendungsidentifizierungen (Id-Tag).

2. Verfahren nach Anspruch 1, bei dem die eindeutigen Sendungsidentifizierungen (Id-Tag) neu geordnet werden durch Nutzen einer Anzeige der digitalen Bilder (3) der Sendungen (2) in einer Bilderkennungsstation.

3. Verfahren nach Anspruch 2, bei dem jedem digitalen Bild (3) einer Sendung (2) in dem Bilderkennungssystem ein Sortiercode zugeordnet wird, der einem Verteilpunkt des Empfängers entspricht.

4. Verfahren nach Anspruch 1, bei dem die eindeutigen Sendungsidentifizierungen neu geordnet werden durch Nutzen einer Anzeige von digitalen Bildern (3) der Sendungen (2) mittels eines automatischen Zeichenerkennungssystems durch OCR.

5. Verfahren nach einem der Ansprüche 1 bis 4, bei dem die Übermittlung der digitalen Bilder (3) der Sendung (2) mittels eines Kommunikationsnetzwerkes, beispielsweise dem Internet, erfolgt.

## Claims

1. A method of sorting mailpieces (2), in which the mailpieces (2) are sorted automatically in a sorting system with a view to being delivered to a recipient by a mail carrier, and are fed back into a sorting machine (8) for additional sorting in order to re-sequence the mailpieces (2) in a certain classification established by the recipient, said method being **characterized by** the following steps:
· the sorting system transmitting to the recipient digital images (3) corresponding to respective ones of the mailpieces (2) to be delivered to said recipient, these digital images (3) being associated in the transmission with the unique mailpiece identifiers (Id-tags) generated by the sorting system, with a view to said unique mailpiece identifiers (Id-tags) being reorganized relative to one another by the recipient into an order that defines said classification; and
· controlling the sorting machine (8) so that it performs the additional sorting of said mailpieces (2) on ·the basis of said unique mailpiece identifiers (Id-tags) as reorganized into said classification established by the recipient.

2. A method according to claim 1, wherein the unique mailpiece identifiers (Id-tags) are re-sequenced by making use of displaying the digital images (3) of the mailpieces (2) in a video coding station.

3. A method according to claim 2, wherein in the video coding system, each digital image (3) of a mailpiece (2) is associated with a sorting code corresponding to a delivery point of the recipient.

4. A method according to claim 1, wherein the unique mailpiece identifiers are re-sequenced by making use of displaying the digital images (3) of the mailpieces (2) via an OCR automatic recognition system.

5. A method according to any one of claims 1 to 4, wherein the digital images (3) of a mailpiece (2) are transmitted via a communications network, e.g. the Internet.
